# EUROPÄISCHE PATENTSCHRIFT

(11) **EP 1 461 701 B1**
(45) Veröffentlichungstag und Bekanntmachung des Hinweises auf die Patenterteilung: **07.06.2006**
(21) Anmeldenummer: 02774420.0
(22) Anmeldetag: 25.09.2002
(51) Int. Cl.: G06F 11/28

(54) **PROGRAMMGESTEUERTE EINHEIT MIT ÜBERWACHUNGSEINRICHTUNG**
PROGRAM-CONTROLLED UNIT WITH MONITORING DEVICE
UNITE COMMANDEE PAR UN PROGRAMME, COMPORTANT UN DISPOSITIF DE SUPERVISION

(30) Priorität: 28.09.2001 DE 10148157
(43) Veröffentlichungstag der Anmeldung: 29.09.2004
(73) Patentinhaber: Infineon Technologies AG, 81669 München (DE)
(72) Erfinder: VON WENDORFF, Wilhard, Christophorus, 81241 München (DE)
(74) Vertreter: Repkow, Ines
(86) Internationale Anmeldenummer: PCT/DE2002/003644
(87) Internationale Veröffentlichungsnummer: WO 2003/029979

(56) Entgegenhaltungen:
- WO-A-00/54155
- DD-A- 290 965
- DD-A- 290 967
- US-A- 3 763 474
- US-A- 6 115 832

## Beschreibung

Die vorliegende Erfindung betrifft eine Vorrichtung gemäß dem Oberbegriff des Patentanspruchs 1, d.h. eine programmgesteuerte Einheit.

Der Aufbau und die Funktion von programmgesteuerten Einheiten wie Mikroprozessoren, Mikrocontrollern, Signalprozessoren etc. sind bekannt und bedürfen keiner näheren Erläuterung.

Ein bekanntes Problem von programmgesteuerten Einheiten besteht darin, daß diese aus den verschiedensten Gründen fehlerhaft arbeiten können. Dies ist insbesondere beim Einsatz von programmgesteuerten Einheiten in sicherheitskritischen Systemen, beispielsweise beim Einsatz von programmgesteuerten Einheiten zur Steuerung eines Anti-Blockier-Systems (ABS) oder zur Steuerung eines Airbags ein großes Problem. In solchen Systemen eingesetzte programmgesteuerte Einheiten müssen unter allen Umständen fehlerfrei arbeiten oder zumindest dafür sorgen können, daß das Systems beim Auftreten eines Fehlers in einen definierten Zustand gebracht werden.

Die wohl am weitesten verbreitete Möglichkeit hierfür besteht darin, das solche Systeme redundant aufgebaut werden, d.h. bestimmte Komponenten wie programmgesteuerte Einheiten oder Teile derselben, Speichereinrichtungen etc. mehrfach enthalten.

Läßt man die mehrfach vorgesehenen Komponenten parallel arbeiten, d.h. gleichzeitig die selben Aktionen ausführen, so kann durch einen Vergleich von bestimmten Ergebnissen, Zuständen oder Ereignissen ermittelt werden, ob und gegebenenfalls welche der mehrfach vorgesehenen Komponenten fehlerhaft arbeitet, und eine fehlerhaft arbeitende Komponente automatisch durch eine ordnungsgemäß arbeitende Komponente ersetzt werden oder das System in einen definierten Zustand gebracht werden.

Auf diese Art und Weise können jedoch nur solche Fehler erkannt werden, die in den mehrfach vorgesehenen Komponenten nicht gleichzeitig auftreten. Daß in mehreren Komponenten gleichzeitig der selbe Fehler auftritt kann beispielsweise bei kurzzeitigen Einbrüchen der Versorgungsspannung vorkommen. Um auch solche Fehler erkennen zu können, kann vorgesehen werden, die mehrfach vorgesehenen Komponenten mit einem gewissen zeitlichen Versatz arbeiten zu lassen. Dann wirken sich in den mehrfach vorgesehenen Komponenten gleichzeitig auftretende Fehler unterschiedlich aus, und es kann durch einen Vergleich der Ergebnisse, Zustände oder Ereignisse ermittelt werden, ob und gegebenenfalls welche der mehrfach vorgesehenen Komponenten fehlerhaft arbeitet.

Diese Art der Fehlererkennung funktioniert aber nicht immer. Insbesondere können Fehler, die auftreten, während die mehrfach vorgesehenen Komponenten in den Sleep-Mode versetzt sind, nicht erkannt werden. Daß im Sleep-Mode auftretende Fehler nicht erkannt werden, mag auf den ersten Blick als bedeutungslos erscheinen. Wenn diese Fehler jedoch die selbe bleibende Veränderung in den mehrfach vorgesehenen Komponenten zur Folge haben, ist dies sehr wohl von Bedeutung. Solche Fehler können nämlich nach dem Aufwecken der mehrfach vorgesehenen Komponenten nicht erkannt werden. Das System scheint dann fehlerfrei zu arbeiten, obgleich dies in Wirklichkeit gar nicht der Fall ist.

Dokument WO00/54155 offenbart eine Programmgesteuerte Einheit mit einer Überwachungseinrichtung, welche einen vom Ablauf des von der programmgesteuerten Einheit ausgeführten Programms abhängenden Wert im Ansprechen auf ein bestimmtes Ereignis oder zu einem bestimmten Zeitpunkt mit einem vorgegebenen Wert vergleicht. In diesem Dokument wird die Problematik bezüglich der Identifikation von Fehlern die mit der Ausführungszeit bestimmter Programmteile zusammenhängen weder identifiziert noch wird auf eine mögliche Lösung jener Problematik hingewiesen.
WO00/54155 beschreibt lediglich ein Verfahren zur Überwachung der Ausführung einer Reihe von Befehlen eines Programms, welches die Sequenz der Befehlen analysiert und das Resultat der Analyse verifiziert, indem es mit in dem Programm gespeicherten Referenzdaten vergleicht.

Dokument US-A-3 763 474 beschreibt ein Verfahren, das bei der Echtzeit-Abarbeitung von Befehlen in einem Multiprozessorsystem eingesetzt wird und Informationen liefert, die die Echtzeit-Abarbeitung betreffen. Das Sammeln dieser Informationen wird durch einen speziellen Befehl angestoßen, der in dem Programmcode integriert ist. Die gesammelte Informationen beinhalten Parameter wie z. B. welcher Prozessor hat welchen Befehl wann abgearbeitet, usw.

Dokument DD-A-290 965 beschreibt ein Verfahren zur Überwachung der ordnungsgemäßen Abarbeitung von Unterprogrammen. Vor Ausführung eines Unterprogramms wird eine der maximal zulässigen Bearbeitungszeit für das Unterprogramm entsprechende Zeitkonstante in ein reserviertes Zeitregister eingetragen und ein spezieller Rechnerstatus für Zeitüberwachung eingestellt. Falls die Bearbeitungszeit des Unterprogramms die maximal zulässige Zeit überschreitet, wird eine Fehlerbehandlung ausgelöst. In DD-A-290 965 wird aber keiner vom Programmablauf abhängender Wert benutzt, der mit der entsprechenden Zeitkonstante verglichen wird. Das Zeitregister wird lediglich in festgelegten Prozeßzeitintervalle schrittweise gegen einen Grenzwert gesetzt (z.B. 0), wobei beim Erreichen dieses Grenzwertes eine Fehlerbehandlung ausgelöst wird.

Der vorliegenden Erfindung liegt daher die Aufgabe zugrunde, eine Möglichkeit zu finden, durch welche in einer programmgesteuerten Einheit auftretende Fehler mit geringem Aufwand unter allen Umständen zuverlässig erkannt werden können.

Diese Aufgabe wird erfindungsgemäß durch die in Patentanspruch 1 beanspruchte programmgesteuerte Einheit gelöst.

Die erfindungsgemäße programmgesteuerte Einheit zeichnet sich dadurch aus, daß die programmgesteuerte Einheit eine Überwachungseinrichtung enthält, welche einen vom Ablauf des von der programmgesteuerten Einheit ausgeführten Programms abhängenden Wert im Ansprechen auf ein bestimmtes Ereignis oder zu einem bestimmten Zeitpunkt mit einem vorgegebenen Wert vergleicht, wobei der vom Programmablauf abhängende Wert unter Berücksichtigung von Daten gebildet wird, die die Zeit repräsentieren, welche seit einem bestimmten Bezugszeitpunkt vergangen ist.

Dadurch ist es auf einfache Art und Weise, insbesondere ohne bestimmte Systemkomponenten oder Teile derselben mehrfach vorsehen zu müssen, möglich, in der programmgesteuerten Einheit auftretende Fehler jederzeit und unter allen Umständen erkennen zu können.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Figuren näher beschrieben. Es zeigen
- Figur 1: den prinzipiellen Aufbau der im folgenden beschriebenen programmgesteuerten Einheit, und
- Figur 2: den Aufbau einer Überwachungseinrichtung der programmgesteuerten Einheit gemäß Figur 1.

Die im folgenden beschriebene programmgesteuerte Einheit ist ein Mikrocontroller. Die nachfolgend näher beschriebenen Besonderheiten des Mikrocontrollers lassen sich jedoch auch bei beliebigen anderen programmgesteuerten Einheiten, beispielsweise bei Mikroprozessoren oder Signalprozessoren einsetzen.

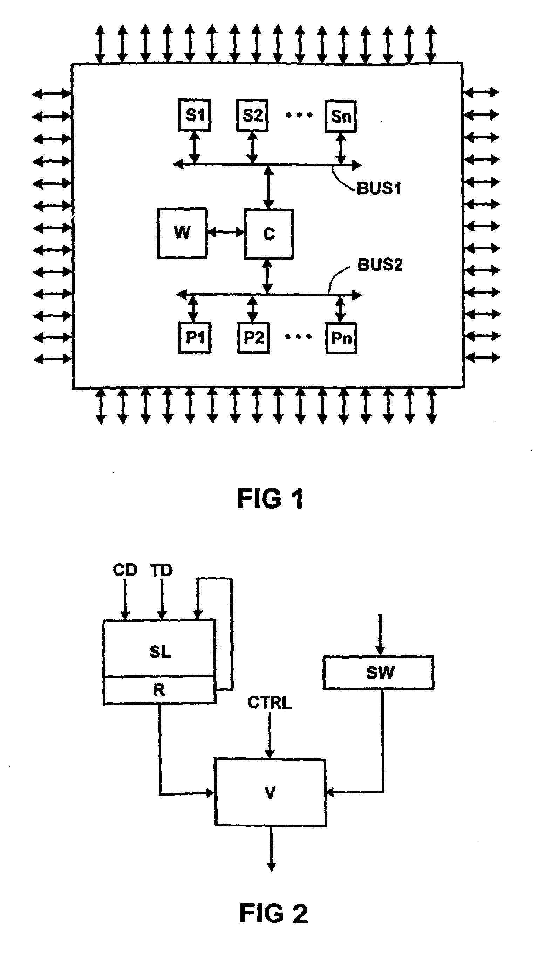

Der Aufbau des betrachteten Mikrocontrollers ist in Figur 1 gezeigt. Der Vollständigkeit halber sei bereits an dieser Stelle darauf hingewiesen, daß nur die vorliegend besonders interessierenden Teile des Mikrocontrollers gezeigt sind und beschrieben werden.

Der in der Figur 1 gezeigte Mikrocontroller enthält einen Core C, über einen ersten Bus BUS1 mit dem Core C verbundene Speichereinrichtungen S1 bis Sn, über einen zweiten Bus BUS2 mit dem Core C verbundene Peripherieeinheiten P1 bis Pn, sowie eine mit dem Core C (und eventuell zusätzlich mit weiteren Komponenten des Mikrocontrollers) verbundene Überwachungseinrichtung W.

Der Core C liest aus den Speichereinrichtungen S1 bis Sn oder aus einer in der Figur 1 nicht gezeigten, außerhalb des Mikrocontrollers vorgesehenen externen Speichereinrichtung Befehle und Operanden repräsentierende Daten aus und führt diese aus.

Die Speichereinrichtungen S1 bis Sn können durch ein ROM, einen Flashspeicher, ein RAM, oder durch beliebige andere Speichereinrichtungen gebildet werden.

Die Peripherieeinheiten P1 bis Pn sind beispielsweise ein A/D-Wandler, ein Timer, eine Codiereinrichtung, ein DMAcontroller, ein CAN-Controller, ein USB-Controller, oder sonstige in Mikrocontroller integrierbare Einrichtungen.

Die Überwachungseinrichtung W überwacht die ordnungsgemäße Funktion des Core C.

### Die Überwachungseinrichtung W

- erhält vom Core C Daten, die vom Ablauf des vom Core C ausgeführten Programmes abhängen,
- ermittelt bei Bedarf eine bestimmte Eigenschaft dieser Daten,
- vergleicht die erhaltenen Daten oder die die bestimmten Eigenschaften dieser Daten repräsentierenden Daten im Ansprechen auf vorgegebene Ereignisse oder zu bestimmten Zeitpunkten mit zuvor festgelegten Daten, und
- geht davon aus, daß der Core C ordnungsgemäß arbeitet, wenn die verglichenen Daten übereinstimmen, bzw.
- geht davon aus, daß der Core C nicht ordnungsgemäß arbeitet, wenn die verglichenen Daten nicht übereinstimmen, und ergreift geeignete Maßnahmen, um - soweit dies unter den gegebenen Umständen möglich ist - die Sicherheit des den Mikrocontroller enthaltenden Systems aufrechtzuerhalten oder wiederherzustellen.

Die Daten, die die Überwachungseinrichtung W vom Core C erhält, sind beispielsweise
- die Adressen, von welchen die von diesen ausgeführten Befehle gelesen werden, und/oder
- die die ausgeführten Befehle repräsentierenden Daten, und/oder
- die Adressen, von welchen die zur Befehlsausführung benötigten Operanden gelesen werden, und/oder
- die verwendeten Operanden.

Dabei kann auch vorgesehen werden, daß nur ausgewählte Adressen und/oder Daten an die Überwachungseinrichtung W übermittelt werden, oder daß von der Überwachungseinrichtung W nur ausgewählte Adressen und/oder Daten berücksichtigt werden, beispielsweise nur die Adressen von jedem n-ten Befehl, oder nur Befehle und/oder Operanden, die unter einer innerhalb eines bestimmten Adreßbereichs liegenden Adresse gespeichert sind, oder die gerade nicht unter einer innerhalb eines bestimmten Adreßbereichs liegenden Adresse gespeichert sind.

Unabhängig hiervon werden der Überwachungseinrichtung W vorzugsweise nur solche Daten zugeführt, oder von der Oberwachungseinrichtung W nur solche Daten berücksichtigt, die mit den vom Core C ausgeführten Befehlen in Zusammenhang stehen, also beispielsweise nicht Befehle, Operanden, und/oder Adressen von Befehlen oder Operanden, die durch Prefetches geladen, aber letztlich nicht ausgeführt werden.

Die vorstehend genannten, der Überwachungseinrichtung W vom Core C zugeführten Daten lassen erkennbar mehr oder weniger genaue Rückschlüsse auf die vom Core C durchgeführten Aktionen zu.

Der Überwachungseinrichtung W können zusätzlich zu den vorstehend genannten Daten oder anstelle derselben auch beliebige andere Daten zugeführt werden, welche eine Überwachung der vom Core C durchgeführten Aktionen ermöglichen. Beispielsweise kann vorgesehen werden, daß der Überwachungseinrichtung W vom Core C oder einer anderen Komponente des Mikrocontrollers (beispielsweise einem Timer) eine eine Zeit repräsentierende Information zugeführt wird. Diese, im folgenden als Zeit-Daten bezeichnete Information kann die Zeit angeben, die seit einem bestimmten Bezugszeitpunkt vergangen ist, oder kann den Zeitpunkt angeben, zu welchem andere Daten, die der Überwachungseinrichtung W zugeführt werden, beispielsweise eine Befehlsadresse durch den Core C angefordert, erhalten, und/oder verwendet wurde. Dann kann durch die Überwachungseinrichtung W nicht nur überprüft werden, ob die vom Mikrocontroller auszuführenden Aktionen überhaupt ausgeführt werden, und/oder ob diese Aktionen in der richtigen Reihenfolge ausgeführt wurden, sondern auch, ob die betreffenden Aktionen zum richtigen Zeitpunkt ausgeführt wurden.

Insbesondere wenn es sich um größere Datenmengen handelt, die von der Überwachungseinrichtung W pro Zeiteinheit berücksichtigt werden müssen, erweist es sich als vorteilhaft, wenn die Überwachungseinrichtung W dem von ihr durchgeführten Vergleich nicht die der Überwachungseinrichtung W zugeführten Daten selbst, sondern einen basierend auf diesen Daten gebildeten anderen Wert unterzieht. Dieser andere Wert ist im betrachteten Beispiel eine Signatur, die aus den der Überwachungseinrichtung W zwischen zwei Vergleichen zugeführten Daten gebildet wird. Diese Signatur wird beispielsweise gebildet durch:
- eine Addition der Daten, die der Überwachungseinrichtung W nacheinander zugeführt werden, oder
- eine Addition der CRCs (cyclic redundancy checksum) der Daten, die der Überwachungseinrichtung W nacheinander zugeführt werden, oder
- eine Addition der Paritäten der Daten, die der Überwachungseinrichtung W nacheinander zugeführt werden, oder
- eine logische oder arithmetische Verknüpfung von Daten, die sonstige Eigenschaften der der Überwachungseinrichtung W nacheinander zugeführten Daten repräsentieren.

Dabei kann auch vorgesehen werden, daß die Beiträge, welche die der Überwachungseinrichtung zugeführten Daten zur Signatur liefern, nach einem festgelegten Schema unterschiedlich gewichtet werden. Beispielsweise kann vorgesehen werden, daß die CRC einer der Überwachungseinrichtung zugeführten Adresse einfach gewichtet wird, wohingegen die CRC der sich auf die Adresse beziehenden Zeitdaten doppelt gewichtet wird, und/oder daß die CRCs von der Überwachungseinrichtung nacheinander zugeführten Daten unterschiedlich gewichtet werden.

Die vom Ablauf des vom Core C ausgeführten Programms abhängende Signatur wird im betrachteten Beispiel durch einen in der Überwachungseinrichtung W vorgesehene Signaturgenerator gebildet.

Der durch den Signaturgenerator gebildete Wert oder die der Überwachungseinrichtung W vom Core C zugeführten Daten werden in der Überwachungseinrichtung mit einem vorgegebenen anderen Wert verglichen.

Der vorgegebene andere Wert ist ein Wert, der während oder nach der Programmentwicklung ermittelt wird. Es handelt sich um den Wert, der - sofern das vom Core C auszuführende Programm ordnungsgemäß ausgeführt wurde - mit den Daten übereinstimmt, mit welchen er in der Überwachungseinrichtung W verglichen wird. Der vorgegebene Wert ist im betrachteten Beispiel in einer der Speichereinrichtungen S1 bis Sn des Mikrocontrollers gespeichert und wird vom Core C vor der Durchführung des Vergleichs in die Überwachungseinrichtung W transferiert. Sofern die Überwachungseinrichtung W nicht nur ein bestimmtes Programm oder einen bestimmten Programmteil zu überwachen hat, sondern verschiedene Programme oder Programmteile, sind den verschiedenen Programmen oder Programmteilen zugeordnete, verschiedene vorgegebene Werte in den Speichereinrichtungen S1 bis Sn gespeichert, und werden diese verschiedenen Werte in die Überwachungseinrichtung W transferiert.

Der Vergleich wird auf das Auftreten eines bestimmten Ereignisses hin oder zu vorgegebenen Zeitpunkten durchgeführt.

Die bestimmten Ereignisse, auf deren Auftreten hin ein Vergleich ausgeführt wird, können von der Überwachungseinrichtung W selbst oder von einer anderen Komponente des Mikrocontrollers detektiert werden. Ein solches bestimmtes Ereignis kann beispielsweise darin bestehen, daß der Core C einen bestimmten Befehl oder einen an einer bestimmten Adresse gespeicherten Befehl ausführt. Es dürfte einleuchten und bedarf keiner näheren Erläuterung, daß auch beliebige andere Ereignisse zum Anlaß genommen werden können, einen Vergleich durchzuführen.

Aus dem Ergebnis des Vergleichs kann erkannt werden, ob der Mikrocontroller ordnungsgemäß arbeitete. Dabei kann - abhängig von der Art und Weise, auf welche die Signatur gebildet wird - überprüft werden,
- ob der Core seit dem letzten Vergleich die Befehle ausgeführt hat, die er ausführen müßte, und/oder
- ob er die Befehle in der richtigen Reihenfolge ausgeführt hat, und/oder
- ob er die Befehle zum richtigen Zeitpunkt ausgeführt hat.

Der prinzipielle Aufbau der Überwachungseinrichtung W ist in Figur 2 gezeigt.

Die Überwachungseinrichtung W enthält einen Signalgenerator SG, eine Speichereinrichtung SW, und eine Vergleichseinrichtung V, wobei der Signalgenerator SG eine Signaturlogik SL und ein Register R umfaßt.

Der Signaturlogik SL werden
- die der Überwachungseinrichtung W vom Core C zugeführten, mit dem Bezugszeichen CD bezeichneten Adressen, Befehle und/oder Operanden,
- Zeit-Daten TD, welche angeben, zu welchem Zeitpunkt die Daten CD vom Core C angefordert, erhalten, oder verwendet wurden, und
- die im Register R gespeicherten Daten
zugeführt. Die Signaturlogik SL bildet aus diesen Daten die vorstehend bereits erwähnte Signatur und schreibt diese in das Register R. Dabei wird so vorgegangen, daß die Signaturlogik SL jedesmal, wenn sie ein neues Datum CD, beispielsweise eine Befehlsadresse vom Core C zugeführt bekommt, aus den Daten CD und TD die für die Signaturbildung relevanten Informationen, beispielsweise die CRC ermittelt, zum Inhalt des Registers R addiert, und das Ergebnis der Addition ins Register R schreibt. Das Register R kann durch eine in der Figur 2 nicht gezeigte Einrichtung auf 0 gesetzt werden. Dadurch kann festgelegt werden, wann mit der Signatur-Bildung jeweils neu begonnen wird.

Die Speichereinrichtung SW dient zur Speicherung des vorgegebenen Wertes, mit welchem die im Register R gespeicherte Signatur beim Eintreten eines bestimmten Ereignisses oder zu einem bestimmten Zeitpunkt verglichen wird. Der vorgegebene Wert (Soll-Wert der Signatur) ist in einer der Speichereinrichtungen S1 bis Sn oder in einer außerhalb des Mikrocontrollers vorgesehenen externen Speichereinrichtung gespeichert und wird durch den Core C in die Speichereinrichtung SW transferiert.

Die Vergleichseinrichtung V vergleicht beim Eintreten eines bestimmten Ereignisses oder zu einem bestimmten Zeitpunkt den Inhalt des Registers R mit dem Inhalt der Speichereinrichtung SW. Worin das bestimmte Ereignis bestehen kann, wurde vorstehend bereits beispielhaft erwähnt. Die Vergleichseinrichtung V weist einen Steueranschluß auf, über welchen ihr durch ein Steuersignal CTRL signalisiert wird, wann ein Vergleich durchzuführen ist. Das Steuersignal CTRL kann innerhalb oder außerhalb der Überwachungseinrichtung W erzeugt werden.

Wenn die Vergleichseinrichtung V eine Übereinstimmung der von ihr verglichenen Werte feststellt, bedeutet dies, daß der Mikrocontroller ordnungsgemäß arbeitet. Wenn die Vergleichseinrichtung feststellt, daß die verglichenen Werte nicht übereinstimmen, bedeutet dies, daß der Mikrocontroller nicht ordnungsgemäß arbeitet. In diesem Fall müssen geeignete Maßnahmen ergriffen werden, um den ordnungsgemäßen Betrieb des den Mikrocontroller enthaltenden Systems wiederherzustellen oder das den Mikrocontroller enthaltende System in einen definierten Zustand zu bringen. Dies kann beispielsweise dadurch geschehen, daß die Überwachungseinrichtung W oder eine mit dieser kooperierende Mikrocontroller-Komponente bei einem keine Übereinstimmung signalisierenden Vergleichsergebnis einen Interrupt Request ausgibt. Dabei kann vorgesehen werden, daß gleich das Ausgangssignal der Vergleichseinrichtung V als Interrupt-Request-Signal verwendet wird. Es könnte auch vorgesehen werden, daß bei einem keine Übereinstimmung signalisierenden Vergleichsergebnis ein Zurücksetzen des Mikrocontrollers veranlaßt wird. Dabei kann vorgesehen werden, daß gleich das Ausgangssignal der Vergleichseinrichtung V als Reset-Signal verwendet wird.

Zusätzlich oder alternativ kann aber auch vorgesehen werden, durch den Mikrocontroller auszuführende Aktionen, beispielsweise das Zünden des Airbag eines Kraftfahrzeuges vom Ausgangssignal der Vergleichseinrichtung V abhängig zu machen, also den Airbag nur zu zünden, wenn das Ausgangssignal der Vergleichseinrichtung V eine Übereinstimmung der verglichenen Werte signalisiert.

Die beschriebene Überwachungseinrichtung läßt sich auf unterschiedlich Art und Weise einsetzen.

Eine erste Einsatzmöglichkeit besteht darin, daß die beschriebene Überwachung nur in bestimmten Phasen durchgeführt wird, beispielsweise nach der Inbetriebnahme des Mikrocontrollers oder wenn der Mikrocontroller nach einer inaktiven Phase wieder in den aktiven Zustand versetzt wird, wie es z.B. bei einem Versetzen des Mikrocontrollers aus dem Sleep-Mode in den normalen Modus der Fall ist. In solchen Fällen kann vorgesehen werden, daß der Mikrocontroller vor der Aufnahme der ihm obliegenden Tätigkeit (vor der Ausführung des eigentlich auszuführenden Programms) ein Testprogramm ausführt, und die ordnungsgemäße Ausführung des Testprogramms durch die vorstehend beschriebene Überwachung kontrolliert wird.

Eine andere Einsatzmöglichkeit der Überwachungseinrichtung W besteht darin, daß die Überwachungseinrichtung die ordnuncisgemäße Ausführung des vom Mikrocontroller auszuführenden Anwendungsprogramms oder von bestimmten Teilen des Anwendungsprogramms überwacht.

In beiden Fällen kann auch überprüft werden, ob bestimmte oder alle Befehle zu einem vorgegebenen Zeitpunkt ausgeführt werden.

Dadurch läßt sich beispielsweise, aber nicht ausschließlich überwachen, ob ein Anwendungsprogramm ordnungsgemäß ausgeführt wird, welches eine bestimmte Anzahl von Tasks umfaßt, die wiederholt in einer vorgegebenen Reihenfolge abgearbeitet werden, und deren Ausführung im Normalfall jeweils exakt eine vorgegebene Zeitdauer in Anspruch nimmt. Ein solches Anwendungsprogramm ist beispielsweise ein Programm, welches im ungestörten Normalfall zum Zeitpunkt t=0 mit der Ausführung einer Task A beginnt, zum Zeitpunkt t=10 ms mit der Ausführung einer Task B beginnt, zum Zeitpunkt t=30 ms mit der Ausführung einer Task C beginnt, zum Zeitpunkt t=35 ms mit der Ausführung einer Task D beginnt, usw. Wenn bei einem solchen Anwendungsprogramm zusätzlich vorgesehen wird, daß die Tasks nicht durch Interrupts etc. unterbrochen werden können, so muß, sofern das System ordnungsgemäß arbeitet, genau zu den festgelegten Zeiten jeweils mit der Ausführung einer bestimmten Task begonnen werden. Dies kann durch die beschriebene Oberwachungseinrichtung W zuverlässig überwacht werden. Hierzu muß lediglich überprüft werden, ob zu dem Zeitpunkt, zu welchem ein Taskwechsel zu erfolgen hat, tatsächlich der erste Befehl der neuen Task geholt oder ausgeführt wird, und/oder ob der Zeitpunkt, zu welchem der erste Befehl der Task geholt wird, dem vorgegebenen Taskwechsel-Zeitpunkt entspricht.

In diesem Zusammenhang sei angemerkt, daß ein wie soeben beschrieben arbeitendes Anwendungsprogramm hervorragend für Systeme geeignet ist, die unter allen Umständen fehlerfrei arbeiten müssen, bzw., wenn dies nicht der Fall oder in Frage gestellt ist, sofort in einen definierten Zustand gebracht oder zurückgesetzt werden müssen. Bei einem solchen Programm kann es nämlich auf sehr einfache Weise zuverlässig ausgeschlossen werden, daß für die Sicherheit bedeutsame Aktionen wie beispielsweise die Steuerung des Airbag oder des ABS eines Kraftfahrzeuges aufgrund von Interrupts oder sonstigen Unterbrechungen überhaupt nicht oder nicht ausreichend häufig oder nur in zu großen zeitlichen Abständen ausgeführt werden, oder während der Ausführung unterbrochen werden. Daß bei einem solchen Anwendungsprogramm nicht oder jedenfalls nicht im gewohnten Umfang mit Interrupts gearbeitet werden kann, ist kein Nachteil. Es müssen lediglich Tasks vorgesehen werden, die diejenigen Systemkomponenten, die bislang Interrupt Requests ausgeben, nach gegebenenfalls vorliegenden Anforderungen abfragen und darauf reagieren.

Aus den vorstehenden Ausführungen wird deutlich, daß die Überwachungseinrichtung W zuverlässiger und umfassender überprüfen kann, ob der von der Überwachungseinrichtung überwachte Mikrocontroller ordnungsgemäß arbeitet. Insbesondere kann die Überwachungseinrichtung W im Gegensatz zu den Einrichtungen, die bisher vorgesehen wurden, um Fehler im Mikrocontroller bzw. Fehler in dem den Mikrocontroller enthaltenden System erkennen zu können, feststellen, ob die vom Mikrocontroller auszuführenden Befehle tatsächlich ausgeführt werden, und/oder ob sie in der richtigen Reihenfolge ausgeführt werden, und/oder ob sie auch zum richtigen Zeitpunkt ausgeführt werden. Dabei ist die Überwachungseinrichtung W sogar weniger aufwendig als die Einrichtungen, die bisher vorgesehen wurden, um im Mikrocontroller bzw. dem den Mikrocontroller enthaltenden System erkennen zu können. Insbesondere entfällt die Notwendigkeit, bestimmte Systemkomponenten mehrfach vorsehen zu müssen.

Mit der beschriebenen Überwachungseinrichtung wurde also eine. Möglichkeit gefunden, durch welche in einer programmgesteuerten Einheit auftretende Fehler mit geringem Aufwand unter allen Umständen zuverlässig erkannt werden können.

### Bezugszeichenliste

- BUSx: Bus
- C: Core
- Px: Peripherieeinheit
- R: Register
- SG: Signaturgenerator
- SL: Signaturlogik
- SW: Speichereinrichtung
- Sx: Speichereinrichtung
- V: Vergleichseinrichtung
- W: Überwachungseinrichtung

## Patentansprüche

1. Programmgesteuerte Einheit, mit einer Überwachungseinrichtung (W), welche einen vom Ablauf des von der programmgesteuerten Einheit ausgeführten Programms abhängenden Wert im Ansprechen auf ein bestimmtes Ereignis oder zu einem bestimmten Zeitpunkt mit einem vorgegebenen Wert vergleicht,
**dadurch gekennzeichnet,**
**daß** der vom Programmablauf abhängende Wert unter Berücksichtigung von Daten gebildet wird, die die Zeit repräsentieren, welche seit einem bestimmten Bezugszeitpunkt vergangen ist.

2. Programmgesteuerte Einheit nach Anspruch 1,
**dadurch gekennzeichnet,**
**daß** der Überwachungseinrichtung (W) die Adressen zugeführt werden, unter welchen die von der programmgesteuerten Einheit ausgeführten Befehle gespeichert sind.

3. Programmgesteuerte Einheit nach Anspruch 1 oder 2,
**dadurch gekennzeichnet,**
**daß** der Überwachungseinrichtung die Daten zugeführt werden, die die von der programmgesteuerten Einheit ausgeführten Befehle repräsentieren.

4. Programmgesteuerte Einheit nach einem der vorhergehenden Ansprüche,
**dadurch gekennzeichnet,**
**daß** der Überwachungseinrichtung (W) die Adressen zugeführt werden, unter welchen die von der programmgesteuerten Einheit verwendeten Operanden gespeichert sind.

5. Programmgesteuerte Einheit nach einem der vorhergehenden Ansprüche,
**dadurch gekennzeichnet,**
**daß** der Überwachungseinrichtung (W) die Daten zugeführt werden, die die von der programmgesteuerten Einheit verwendeten Operanden repräsentieren.

6. Programmgesteuerte Einheit nach einem der vorhergehenden Ansprüche,
**dadurch gekennzeichnet,**
**daß** der Überwachungseinrichtung (W) Daten zugeführt werden, die die Zeit repräsentieren, welche seit einem bestimmten Bezugszeitpunkt vergangen ist.

7. Programmgesteuerte Einheit nach einem der vorhergehenden Ansprüche,
**dadurch gekennzeichnet,**
**daß** die die Zeit repräsentierenden Daten den Zeitpunkt angeben, zu welchem andere Daten, die der Überwachungseinrichtung zugeführt werden, von der programmgesteuerten Einheit oder der diese Daten verwendenden Komponente derselben angefordert, erhalten, oder verwendet wurden.

8. Programmgesteuerte Einheit nach einem der vorhergehenden Ansprüche,
**dadurch gekennzeichnet,**
**daß** die Überwachungseinrichtung (W) einen Signaturgenerator (SG) enthält, der eine von den der Überwachungseinrichtung (W) zugeführten Daten abhängende Signatur erzeugt.

9. Programmgesteuerte Einheit nach Anspruch 8,
**dadurch gekennzeichnet,**
**daß** der Signaturgenerator (SG) eine die Signatur bildende Signaturlogik (SL) und ein die Signatur speicherndes Register (R) umfaßt.

10. Programmgesteuerte Einheit nach Anspruch 9,
**dadurch gekennzeichnet,**
**daß** die Signaturlogik (SL) die der Überwachungseinrichtung (W) zugeführten Daten öder einen eine bestimmte Eigenschaft dieser Daten repräsentierenden Wert durch eine arithmetische oder logische Operation mit dem Inhalt des Registers (R) verknüpft, und das Ergebnis dieser Operation in das Register schreibt.

11. Programmgesteuerte Einheit nach Anspruch 10, **dadurch gekennzeichnet,**
**daß** der die bestimmte Eigenschaft der Daten repräsentierende Wert die CRC ist.

12. Programmgesteuerte Einheit nach Anspruch 10,
**dadurch gekennzeichnet,**
**daß** der die bestimmte Eigenschaft der Daten repräsentierende Wert die Parität ist.

13. Programmgesteuerte Einheit nach Anspruch 10,
**dadurch gekennzeichnet,**
**daß** die Signaturlogik (SG) die der Überwachungseinrichtung zugeführten Daten zum Inhalt des Registers addiert.

14. Programmgesteuerte Einheit nach einem der vorhergehenden Ansprüche,
**dadurch gekennzeichnet,**
**daß** der vorgegebene Wert so gewählt ist, daß dieser dann, wenn die programmgesteuerte Einheit ordnungsgemäß arbeitet, mit dem damit verglichenen Wert übereinstimmt.

15. Programmgesteuerte Einheit nach Anspruch 14,
**dadurch gekennzeichnet,**
**daß** dann, wenn die durch die Überwachungseinrichtung (W) miteinander verglichenen Werte nicht übereinstimmen, ein Interrupt Request generiert wird.

16. Programmgesteuerte Einheit nach Anspruch 14,
**dadurch gekennzeichnet,**
**daß** dann, wenn die durch die Überwachungseinrichtung (W) miteinander verglichenen Werte nicht übereinstimmen, ein Zurücksetzen der programmgesteuerten Einheit veranlaßt wird.

17. Programmgesteuerte Einheit nach Anspruch 14,
**dadurch gekennzeichnet,**
**daß** es vom Ergebnis des von der Überwachungseinrichtung (W) durchgeführten Vergleichs abhängig gemacht wird, ob eine von der programmgesteuerten Einheit durchzuführende Aktion durchgeführt wird oder nicht.

18. Programmgesteuerte Einheit nach einem der vorhergehenden Ansprüche,
**dadurch gekennzeichnet,**
**daß** die programmgesteuerte Einheit nach der Inbetriebnahme derselben und/oder nach dem Versetzen derselben aus einem inaktiven Zustand in einen aktiven Zustand ein Testprogramm ausführt, und daß durch die Überwachungseinrichtung. (W) durch den von ihr durchgeführten Vergleich überprüft, ob dieses Testprogramm ordnungsgemäß ausgeführt wird.

19. Programmgesteuerte Einheit nach einem der vorhergehenden Ansprüche,
**dadurch gekennzeichnet,**
**daß** die Überwachungseinrichtung (W) durch den von ihr durchgeführten Vergleich überprüft, ob ein bestimmterebefehl zu einer bestimmten Zeit ausgeführt wurde.

## Claims

1. Programmable unit having a monitoring device (W) which compares a value which is dependent on the running of the program which is carried out by the programmable unit with a predetermined value in response to a specific event or at a specific time,
**characterized**
**in that** the value which is dependent on the running of the program is formed taking into account data which represents the time which has passed since a specific reference time.

2. Programmable unit according to Claim 1,
**characterized**
**in that** the monitoring device (W) is supplied with the addresses at which the commands which are carried out by the programmable unit are stored.

3. Programmable unit according to Claim 1 or 2,
**characterized**
**in that** the monitoring device is supplied with the data which represents the commands which are carried out by the programmable unit.

4. Programmable unit according to one of the preceding claims,
**characterized**
**in that** the monitoring device (W) is supplied with the addresses at which the operands which are used by the programmable unit are stored.

5. Programmable unit according to one of the preceding claims,
**characterized**
**in that** the monitoring device (W) is supplied with the data which represents the operands which are used by the programmable unit.

6. Programmable unit according to one of the preceding claims,
**characterized**
**in that** the monitoring device (W) is supplied with data which represents the time which has passed since a specific reference time.

7. Programmable unit according to one of the preceding claims,
**characterized**
**in that** the data which represents the time indicates the time at which other data which is supplied to the monitoring device was requested, received or used by the programmable unit or by the component of the programmable unit which uses this data.

8. Programmable unit according to one of the preceding claims,
**characterized**
**in that** the monitoring device (W) contains a signature generator (SG), which produces a signature which is dependent on the data which is supplied to the monitoring device (W).

9. Programmable unit according to Claim 8,
**characterized**
**in that** the signature generator (SG) has signature logic (SL), which forms the signature, and a register (R) which stores the signature.

10. Programmable unit according to Claim 9,
**characterized**
**in that** the signature logic (SL) logically links the data which is supplied to the monitoring device (W) or a value which represents a specific characteristic of this data by means of an arithmetic or logic operation to the content of the register (R) and writes the result of this operation to the register.

11. Programmable unit according to Claim 10,
**characterized**
**in that** the value which represents the specific characteristic of the data is the CRC.

12. Programmable unit according to Claim 10,
**characterized**
**in that** the value which represents the specific characteristic of the data is the parity.

13. Programmable unit according to Claim 10,
**characterized**
**in that** the signature logic (SG) adds the data which is supplied to the monitoring device to the content of the register.

14. Programmable unit according to one of the preceding claims,
**characterized**
**in that** the predetermined value is chosen such that, when the programmable unit is operating correctly, it matches the value which is compared with it.

15. Programmable unit according to Claim 14,
**characterized**
**in that**, if the values which are compared with one another by the monitoring device (W) do not match, an interrupt request is generated.

16. Programmable unit according to Claim 14,
**characterized**
**in that**, if the values which are compared with one another by the monitoring device (W) do not match, the programmable unit is reset.

17. Programmable unit according to Claim 14,
**characterized**
**in that** the result of the comparison which is carried out by the monitoring device (W) is used to determine whether an action to be carried out by the programmable unit is or is not carried out.

18. Programmable unit according to one of the preceding claims,
**characterized**
**in that**, after being started up and/or after being changed from an inactive state to an active state, the programmable unit caries out a test program, and in that the monitoring device (W) uses the comparison which is carried out by it to check whether this test program is being carried out correctly.

19. Programmable unit according to one of the preceding claims,
**characterized**
**in that** the monitoring device (W) uses the comparison which is carried out by it to check whether a specific command has been carried out at a specific time.

## Revendications

1. Unité commandée par programme, avec un dispositif de supervision (W) qui compare une valeur dépendant du déroulement du programme exécuté par l'unité commandée par programme, en réponse à un événement déterminé ou à un moment déterminé avec une valeur prédéfinie,
**caractérisée en ce que** la valeur dépendant du déroulement du programme est créée sous considération de données qui représentent le temps qui s'est écoulé depuis un moment de référence déterminé.

2. Unité commandée par programme selon la revendication 1,
**caractérisée en ce que** des adresses sous lesquelles les instructions exécutées par l'unité commandée par programme sont sauvegardées sont amenées au dispositif de supervision (W).

3. Unité commandée par programme selon la revendication 1 ou 2,
**caractérisée en ce que** les données représentant les instructions exécutées par l'unité commandée par programme sont amenées au dispositif de supervision.

4. Unité commandée par programme selon l'une quelconque des revendications précédentes,
**caractérisée en ce que** les adresses sous lesquelles les opérandes utilisés par l'unité commandée par programme sont sauvegardés sont amenées au dispositif de supervision (W).

5. Unité commandée par programme selon l'une quelconque des revendications précédentes,
**caractérisée en ce que** les données représentant les opérandes utilisés par l'unité commandée par programme sont amenées au dispositif de supervision (W).

6. Unité commandée par programme selon l'une quelconque des revendications précédentes,
**caractérisée en ce que** des données représentant le temps qui s'est écoulé depuis un moment de référence déterminé sont amenées au dispositif de supervision (W).

7. Unité commandée par programme selon l'une quelconque des revendications précédentes,
**caractérisée en ce que** les données représentant le temps indiquent le moment auquel d'autres données qui sont amenées au dispositif de supervision sont demandées, obtenues ou utilisées soit par l'unité commandée par programme soit par le composant de cette dernière utilisant lesdites données.

8. Unité commandée par programme selon l'une quelconque des revendications précédentes,
**caractérisée en ce que** le dispositif de supervision (W) contient un générateur de signatures (SG) qui crée une signature dépendant des données amenées au dispositif de supervision (W).

9. Unité commandée par programme selon la revendication 8,
**caractérisée en ce que** le générateur de signatures (SG) comprend une logique de signature (SL) créant la signature et un registre (R) sauvegardant la signature.

10. Unité commandée par programme selon la revendication 9,
**caractérisée en ce que** la logique de signature (SL) enchaîne les données amenées au dispositif de supervision (W) ou une valeur représentant une caractéristique précise de ces données par une opération arithmétique ou logique avec le contenu du registre (R) et écrit le résultat de cette opération dans le registre.

11. Unité commandée par programme selon la revendication 10,
**caractérisée en ce que** la valeur représentant la caractéristique précise des données est le CRC.

12. Unité commandée par programme selon la revendication 10,
**caractérisée en ce que** la valeur représentant la caractéristique précise des données est la parité.

13. Unité commandée par programme selon la revendication 10,
**caractérisée en ce que** la logique de signature (SG) additionne les données amenées au dispositif de supervision avec le contenu du registre.

14. Unité commandée par programme selon l'une quelconque des revendications précédentes,
**caractérisée en ce que** la valeur prédéfinie est choisie de façon à ce que lorsque l'unité commandée par programme fonctionne selon les règles de l'art, elle concorde avec la valeur avec laquelle elle est comparée.

15. Unité commandée par programme selon la revendication 14,
**caractérisée en ce que** si les valeurs mutuellement comparées par le dispositif de supervision (W) ne concordent pas, une requête d'interruption est générée.

16. Unité commandée par programme selon la revendication 14,
**caractérisée en ce que** si les valeurs mutuellement comparées par le dispositif de supervision (W) ne concordent pas, une réinitialisation de l'unité commandée par programme est provoquée.

17. Unité commandée par programme selon la revendication 14,
**caractérisée en ce que** le fait si une action devant être exécutée par l'unité commandée par programme est exécutée ou non est rendu dépendant du résultat de la comparaison réalisée par le dispositif de supervision (W).

18. Unité commandée par programme selon l'une quelconque des revendications précédentes,
**caractérisée en ce qu'**après sa mise en service et/ou après avoir été amenée d'un état inactif dans un état actif, l'unité commandée par programme exécute un programme de test et **en ce que** par la comparaison effectuée par ses soins, le dispositif de supervision (W) vérifie si ce programme de test est exécuté selon les règles de l'art.

19. Unité commandée par programme selon l'une quelconque des revendications précédentes,
**caractérisée en ce que** par la comparaison effectuée par ses soins, le dispositif de supervision (W) vérifie si une instruction précise est exécutée à un moment précis.
